# EUROPÄISCHE PATENTANMELDUNG

(11) **EP 0 875 981 A1**
(43) Veröffentlichungstag der Anmeldung: **04.11.1998**
(21) Anmeldenummer: 97810265.5
(22) Anmeldetag: 29.04.1997
(51) Int. Cl.: H02K 41/03, B65G 47/91

(54) **Elektromagnetischer Linearantrieb**

(71) Anmelder: Sulzer Electronics AG, 8409 Winterthur (CH)
(72) Erfinder: Hitz, Marco, 3186 Düdingen (CH); Huber, Peter, 3292 Busswil (CH); Rohner, Ronald Dr., 8965 Berikon (CH)
(74) Vertreter: Heubeck, Bernhard

(57) **Zusammenfassung**

Ein elektromagnetischer Linearantrieb hat einen hohlzylindrischen Stator (2) und einen stabförmigen Läufer (3), der im Innern des Stators (2) angeordnet ist und in Richtung der Zylinderachse (A) des Stators relativ zu diesem bewegbar ist Der Läufer (3)weist mindestens einen Kanal (4) auf, der sich in Richtung der Zylinderachse (A) erstreckt und eine durchgängige Verbindung zwischen der distalen Stirnfläche (36) des Läufers (3) und dem dieser Stirnfläche (36) abgewandten Endbereich (5) des Linearantriebs bildet.

## Beschreibung

Die Erfindung betrifft einen elektromagnetischen Linearantrieb gemäss dem Oberbegriff des unabhängigen Patentanspruchs.

Ein bekannter elektromagnetischer Linearantrieb, beispielsweise ein elektromagnetischer Direktlinearmotor, umfasst einen hohlzylindrischen Stator, sowie einen stabförmigen Läufer, der im Innern des Stators angeordnet ist und aufgrund elektromagnetischer Kräfte in Richtung der Zylinderachse des Stators relativ zu diesem zwischen zwei Umkehrpunkten hin- und herbewegbar ist. Dabei kann der Läufer in jeder beliebigen Position zwischen diesen beiden Umkehrpunkten gehalten werden. Mit einem solchen elektromagnetischen Linearantrieb können lineare Hubbewegungen variabler Amplitude und zyklische Bewegungsabläufe im Bereich von mehreren Hertz realisiert werden, ohne dass der Läufer über elektrische Schleifkontakte, Kabel, mechanische Getriebe, Übertragungsgestänge bzw. -hebel oder Riemen mit dem Stator verbunden ist.

Solche elektromagnetischen Linearantriebe eignen sich für eine Vielzahl unterschiedlicher Anwendungen, wie beispielsweise Stell-, Hub- und Schiebebewegungen in Montage-, Verpackungs-, Textil-, Handling- oder Sortiermaschinen. Moderne elektromagnetische Linearantriebe stellen eine zunehmend bedeutendere Alternative zu konventionellen pneumatischen oder hydraulischen Zylindern dar. Sie haben im Vergleich zu diesen konventionellen Vorrichtungen den Vorteil, unabhängig von Druckluft oder einer Hydraulikflüssigkeit zu arbeiten. Zusätzlich haben elektromagnetische Linearantriebe den Vorteil, dass sie bedingt durch ihr Arbeitsprinzip praktisch keinem Verschleiss unterliegen und kaum oder keine Wartung benötigen. Ferner sind sie insbesondere hinsichtlich der Schnelligkeit, der Genauigkeit und der freien Wählbarkeit der Positionierung konventionellen Vorrichtungen wie z. B. pneumatischen Zylindern überlegen.

Auch aufgrund dieser Vorteile ist zu erwarten, dass die Bedeutung elektromagnetischer Linearantriebe künftig noch weiter steigen wird. Es besteht deshalb ein klares Bedürfnis, solche Linearantriebe in einem möglichst breiten Anwendungsgebiet und für eine Vielzahl verschiedenartiger Aufgaben einzusetzen.

Es ist daher eine Aufgabe der Erfindung, einen universell einsetzbaren elektromagnetischen Linearantrieb bereitzustellen, der hinsichtlich seiner potentiellen Anwendungen und Aufgaben deutlich flexibler ist.

Der diese Aufgabe lösende elektomagnetische Linearantrieb ist durch die Merkmale des unabhängigen Anspruchs gekennzeichnet. Der erfindungsgemässe elektromagnetische Linearantrieb hat also einem hohlzylindrischen Stator und einem stabförmigen Läufer, der im Innern des Stators angeordnet ist und in Richtung der Zylinderachse des Stators relativ zu diesem bewegbar ist. Der Läufer weist mindestens einen Kanal auf, der sich in Richtung der Zylinderachse erstreckt und eine durchgängige Verbindung zwischen der distalen Stirnfläche des Läufers und dem dieser Stirnfläche abgewandten Endbereich des Linearantriebs bildet.

Durch diesen Kanal werden die Einsatzmöglichkeiten des elektromagnetischen Linearantriebs deutlich erweitert, sodass der Linearmotor für wesentlich mehr Aufgaben einsetzbar ist. Der Kanal ermöglicht es beispielsweise, Zuleitungen durch das Innere des Stators an die distale Stirnfläche des Läufers zu führen. Solche Zuleitungen können z. B. Versorgungsleitungen für am distalen Ende des Läufers angeordnete Vorrichtungen wie Saug-, Greif-Mess- oder Zuführvorrichtungen sein.

Der Kanal eignet sich beispielsweise für die Aufnahme elektrischer Versorgungs-, Signal-, oder Steuerleitungen. So können beispielsweise am distalen Ende des Läufers Manipuliereinrichtungen, wie Greifzangen oder Schneidevorrichtungen, z. B. zum Greifen bzw. Schneiden von Fäden in Textilmaschinen, vorgesehen sein, deren Energieversorgung und/oder Steuerung über Leitungen erfolgt, die durch den Kanal verlaufen. Auch können am Läufer Messvorrichtungen vorgesehen werden, deren Versorgungsleitungen und/oder Leitungen zur Messdatenübermittlung durch den Kanal verlaufen.

Auch ist es möglich, durch diesen Kanal fluide Substanzen an das distale Ende des Läufers zu befördern oder von diesem zu entfernen. Dadurch können beispielsweise mit Hilfe eines Linearantriebs Proben entnommen werden, indem diese durch den Kanal angesaugt werden. Umgekehrt ist es auch möglich, Substanzen durch diesen Kanal bzw. eine mit ihm verbundenen Dosiervorrichtung, z.B. eine Nadel, auszustossen. So können beispielsweise in automatisierten Prozessen Substanzen in einen Körper eingespritzt bzw. auf diesen aufgebracht werden.

Ferner ist es möglich, den Läufer mit einer Saugvorrichtung zu versehen, um z. B. Teile von einem Förderband anzuheben. Dabei dient der Kanal zur Erzeugung des Unterdrucks. Andererseits kann durch den Kanal auch Luft, Druckluft oder ein anders Gas ausgestossen werden, beispielsweise zum Trocknen, zum Reinigen oder zum Entfernen von Körpern.

Diese nicht abschliessende Aufzählung zeigt, dass der erfindungsgemässe Linearantrieb für eine Vielzahl verschiedenartiger Aufgaben in unterschiedlichen Anwendungsgebieten geeignet ist und somit sehr universell einsetzbar ist.

Besonders vorteilhaft ist dabei, dass der Kanal im Innern des Stators angeordnet ist, weil der erfindungsgemässe Linearantrieb dadurch eine besonders kompakte und platzsparende Ausgestaltung hat. Dies ist insbesondere für den Einsatz in solchen Anlagen bedeutsam, in denen eine möglichst optimale Ausnutzung des zur Verfügung stehenden Raums vonnöten ist.

Weitere vorteilhafte Massnahmen und Ausgestaltungen des erfindungsgemässen elektromagnetischen Linearantriebs ergeben sich aus den abhängigen Ansprüchen.

Im folgenden wird die Erfindung anhand von Ausführungsbeispielen und anhand der Zeichnung näher erläutert. In der schematischen nicht massstäblichen Zeichnung zeigen:
- Fig. 1: einen Längsschnitt durch ein erstes Ausführungsbeispiel des erfindungsgemässen Linearantriebs mit den wesentlichen Teilen,
- Fig. 2: einen Querschnitt durch das erste Ausführungsbeispiel entlang der Linie II-II in Fig. 1,
- Fig. 3: einen Längsschnitt durch ein zweites Ausführungsbeispiel des erfindungsgemässen Linearantriebs,
- Fig. 4: einen Querschnitt durch das zweite Ausführungsbeispiel entlang der Linie IV-IV in Fig. 3, und
- Fign. 5-8: Querschnittsdarstellungen für verschiedenen Varianten des Läufers.

In der Zeichnung sind gleiche oder von der Funktion her gleichwertige Teile mit den gleichen Bezugszeichen versehen.

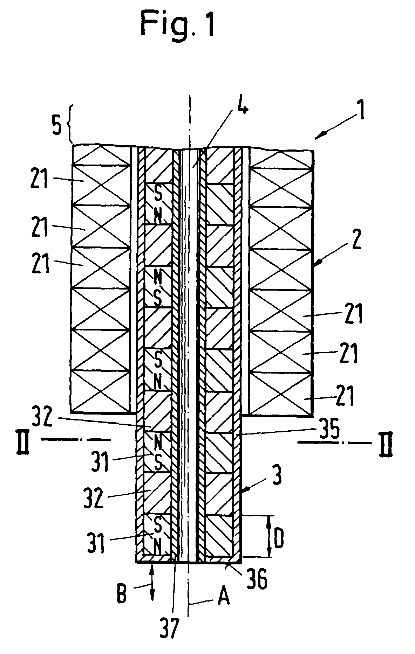

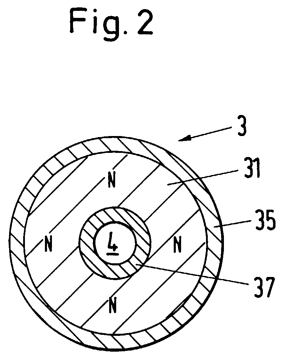

Fig. 1 zeigt in einer teilweise schematischen Darstellung einen Längsschnitt durch ein erstes Ausführungsbeispiel des erfindungsgemässen elektromagnetischen Linearantriebs, der gesamthaft mit dem Bezugszeichen 1 bezeichnet ist. Die Darstellung beschränkt sich auf die für das Verständnis der Erfindung wesentlichen Teile. So sind beispielsweise die gesamten Steuer- und Versorgungseinrichtungen zum Betreiben des Linearantriebs, wie elektrische Zuführungen, Energiequelle, Steuer- und Kontrollvorrichtung, Positionssensoren, aus Gründen der besseren Übersicht nicht dargestellt. Diese Elemente können in an sich bekannter Weise ausgestaltet sein. Zum besseren Verständnis zeigt Fig. 2 noch einen Querschnitt durch das erste Ausführungsbeispiel entlang der Linie II-II in Fig. 1.

Der elektromagnetische Linearantrieb 1 umfasst einen hohlzylindrischen Stator 2, dessen Zylinderachse mit dem Bezugszeichen A bezeichnet ist, und einen im Innern des Stators angeordneten stabförmigen Läufer 3, der in Richtung der Zylinderachse A relativ zu dem Stator 2 bewegbar ist. Der Stator 2 umfasst mehrere Spulen 21, welche durch die Kreuze symbolisch angedeutet sind. Die Spulen 21 sind in Richtung der Zylinderachse A stapelförmig angeordnet und jeweils einzeln oder in Gruppen durch eine nicht dargestellte Steuer- und Versorgungseinrichtung mit Energie versorgbar. Mit den Spulen 21 können im Innern des Stators 2 magnetische Induktionsfelder erzeugt werden, wobei für jede der Spulen 21 oder für jede der Gruppen von Spulen 21 das von ihr erzeugte magnetische Induktionsfeld separat regelbar ist.

Der Läufer 3 umfasst mehrere scheibenförmige Elemente 31, 32, die in Richtung der Zylinderachse A gestapelt angeordnet sind und alle die gleiche axiale Dicke D in Richtung der Zylinderachse A aufweisen. Die scheibenförmigen Elemente 31 sind Magnetscheiben, insbesondere Permanentmagnete, und die scheibenförmigen Elemente 32 sind Distanzhalter, die z. B. aus ferromagnetischem Material wie Eisen oder aus einem Kunststoff bestehen. Bei dem in Fig. 1 gezeigten Ausführungsbeispiel sind die Magnetscheiben 31 jeweils axial magnetisiert, das heisst, ihre eine Stirnfläche stellt jeweils einen magnetischer Nordpol N und ihre andere Stirnfläche jeweils einen magnetischen Südpol S dar. Die scheibenförmigen Elemente 31 und 32 sind in Richtung der Zylinderachse A derart angeordnet, dass sich jeweils zwischen zwei benachbarten Magnetscheiben 31 ein Distanzhalter 32 befindet. Ferner sind die Magnetscheiben 31 so angeordnet, dass jeweils zwei gleichnamige magnetische Pole durch einen Distanzhalter 32 getrennt sind, das heisst, dass jeweils die zwei an den gleichen Distanzhalter 32 angrenzenden Magnetscheiben 31 mit dem gleichen magnetischen Pol an diesen Distanzhalter 32 angrenzen.

Optional kann der Läufer 3 eine äussere im wesentlichen hohlzylindrische Hülse 35 aufweisen, welche die scheibenförmigen Elemente 31, 32 umgibt und welche die äussere Ummantelung des Läufers 3 bildet. Vorzugsweise ist diese Hülse 35 aus einem nichtmagnetischen Material beispielsweise Chromnickelstahl, hergestellt. Die scheibenförmigen Elemente können, z. B. falls auf die Hülse 35 verzichtet wird, mittels eines Klebstoffs oder eines anderen Befestigungsmittels, relativ zueinander fixiert werden.

Beim Betrieb des Linearmotors wird durch entsprechendes, an sich bekanntes Regeln der einzelnen Spulen 21 oder der Gruppen von Spulen 21 der Läufer 3 in Richtung der Zylinderachse A relativ zum Stator 2 hin oder her bewegt, wie dies der Doppelpfeil B andeutet. Auch ist es durch entsprechendes Regeln der Spulen 21 bzw. der Gruppen von Spulen 21 möglich, den Läufer 3 in einer beliebigen Relativposition bezüglich des Stators 2 zu halten.

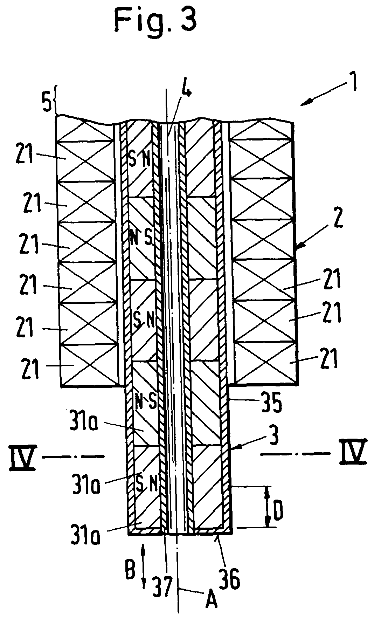

Beim Bewegen des stabförmigen Läufers 3 wird dessen eines Ende mehr oder weniger weit aus dem Stator 2 herausgeschoben oder in diesen hineingezogen. Dieses Ende wird als distales Ende bezeichnet, bzw. die das distale Ende bildende Stirnfläche des stabförmigen Läufers 3 als distale Stirnfläche 36. Gemäss den Darstellungen in den Figuren 1 und 3 ist die distale Stirnfläche 36 des Läufers 3 die untere Stirnfläche.

Erfindungsgemäss weist der Läufer 3 des elektromagnetischen Linearantriebs einen Kanal 4 auf, der sich in Richtung der Zylinderachse A erstreckt und eine durchgängige Verbindung zwischen der distalen Stirnfläche 36 des Läufers 3 und dem dieser Stirnfläche 36 abgewandten Endbereich 5 des Linearantriebs 1 bildet.

Bei dem in Fig. 1 gezeigten Ausführungsbeispiel ist der Kanal 4 zentrisch im Läufer 3 angeordnet. Er erstreckt sich von der distalen Stirnfläche 36 entlang der Zylinderachse A zentrisch durch den gesamten Läufer 3. Durch diesen Kanal 4 können beispielsweise elektrische Zuleitungen für an der distalen Stirnfläche 36 vorgesehenen Werkzeuge, wie Greifzangen oder Messvorrichtungen, geführt werden, oder Zu- bzw. Ableitungen für insbesondere fluide Medien wie z. B. Luft, Druckluft, Farbstoffe, chemische Substanzen, Reagenzien, Spülflüssigkeiten bzw. -gase.

Zur Realisierung des Kanals 4 weist jedes der scheibenförmigen Elemente 31, 32 eine zentrale Bohrung auf, sodass sich beim Stapeln der scheibenförmigen Elemente 31, 32 der Kanal 4 ausbildet. Natürlich können auch zunächst ohne Bohrung ausgestaltetet scheibenförmigen Elemente 31, 32 gestapelt werden. Der Kanal 4 kann dann beispielsweise durch anschliessendes Bohren durch den Stapel erzeugt werden.

Ferner kann optional, wie in Fig. 1 gezeigt, eine innere Hülse 37 in dem Läufer 3 vorgesehen sein, die den Kanal 4 umgibt und begrenzt. Die innere Hülse 37 bildet somit eine Trennwand zwischen dem Kanal 4 und den scheibenförmigen Elementen 31, 32.

Fig. 3 zeigt einen Längsschnitt durch ein zweites Ausführungsbeispiel des erfindungsgemässen Linearantriebs mit den für das Verständnis wesentlichen Teilen. Das zweite Ausführungsbeispiel unterscheidet sich von dem ersten im wesentlichen durch die Ausgestaltung der scheibenförmigen Elemente des Läufers 3. Die übrigen Erläuterungen bezüglich des ersten Ausführungsbeispiels gelten in sinngemäss gleicher Weise auch für das zweite Ausführungsbeispiel.

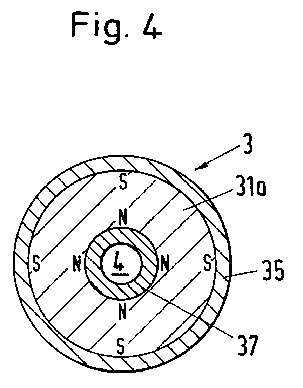

Bei dem zweiten Ausführungsbeispiel sind alle scheibenförmigen Elemente als Magnetringe 31a, insbesondere als Permanentmagnetringe, ausgestaltet, die jedoch im Unterschied zum ersten Ausführungsbeispiel radial magnetisiert sind, das heisst die innere Mantelfläche der Magnetringe 31a stellt jeweils den einen magnetischen Pol dar und die äussere Mantelfläche jeweils den gegensätzlichen magnetischen Pol. Die Magnetringe 31a sind so in dem Läufer 3 angeordnet, dass wechselweise ein magnetischer Nordpol N und ein magnetischer Südpol S in radialer Richtung gesehen aussen liegt. Diese Anordnung ist durch die Buchstaben N bzw. S in Fig. 3 angedeutet. Zum besseren Verständnis zeigt Fig. 4 noch einen Querschnitt durch das zweite Ausführungsbeispiel entlang der Linie IV-IV in Fig. 3. Bei der Ausgestaltung mit den radial magnetisierten Magnetringen 31a kann auf die Distanzelemente 32 (siehe Fig. 1) verzichtet werden. Natürlich ist es auch hier möglich, auf die innere Hülse 37 zu verzichten. Falls die innere Hülse 37 vorgesehen ist, so ist diese vorzugsweise aus einem ferromagnetischen Material wie Eisen hergestellt, um eine möglichst gute magnetische Flussführung zu gewährleisten.

Es versteht sich, dass die Ausgestaltung des Kanals 4 bei dem ersten und dem zweiten Ausführungsbeispiel nicht auf den in den Figuren 2 und 4 dargestellten kreisförmigen Querschnitt beschränkt ist. Der Kanal 4 kann ebenso gut auch eine beliebige andere Querschnittsfläche, wie beispielsweise eine viereckige, ovale, teilweise krummlinig und teilweise geradlinig begrenzte Querschnittsfläche aufweisen. Auch kann sich die Querschnittsfläche in Richtung der Zylinderachse A ändern. Eine eckige, beispielsweise viereckige Querschnittsfläche des Kanals 4 hat insbesondere den Vorteil, dass der Kanal 4 gleichzeitig zur Vermeidung von Rotationen des Läufers 3 um die Zylinderachse A genutzt werden kann. Dazu ist beispielsweise ein bezüglich des Stators 2 drehfest angeordnetes Sicherungsmittel vorgesehen, z. B. ein Stift mit eckigem Querschnitt, der in ein Ende des zentrischen Kanals 4 eingreift und somit eine Drehung des Läufers 3 um die Zylinderachse A verhindert.

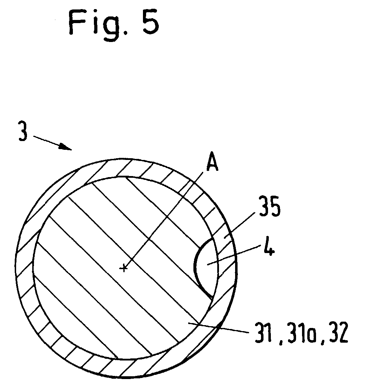

In den Figuren 5 bis 8 sind verschiedenen Varianten für die Ausgestaltung des Läufers 3 und speziell des Kanals 4 dargestellt. Diese Varianten eignen sich sowohl für das erste als auch für das zweite Ausführungsbeispiel.

Bei der in Fig. 5 dargestellten Variante ist der Kanal 4 an der Mantelfläche des Läufers 3 angeordnet. Dabei bildet die äussere, hohlzylindrische Hülse 35 des Läufers 3 eine Begrenzungsfläche des Kanals 4. Natürlich kann diese Variante auch ohne die Hülse 35 ausgebildet sein. Die entsprechende Begrenzungsfläche wird dann durch die innere Wandung des hohlzylindrischen Stators 2 gebildet.

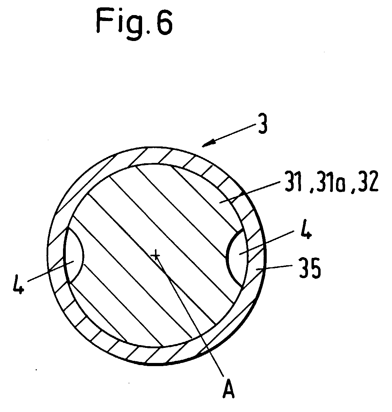

Auch ist es möglich, den Läufer 3 so auszubilden, dass er mehr als einen Kanal 4 aufweist. Bei der in Fig. 6 dargestellten Variante hat der Läufer 3 zwei Kanäle 4, die sich jeweils in Richtung der Zylinderachse A des Stators 2 erstrecken und jeweils eine durchgängige Verbindung zwischen der distalen Stirnfläche 36 (siehe z. B. Fig. 1) des Läufers und dem dieser Stirnfläche 36 abgewandten Endbereich 5 des Linearantriebs bilden, wobei die Kanäle 4 jeweils an der Mantelfläche des Läufers 3 angeordnet sind. Auch hier kann, muss aber nicht, die äussere Hülse 35 vorgesehen sein.

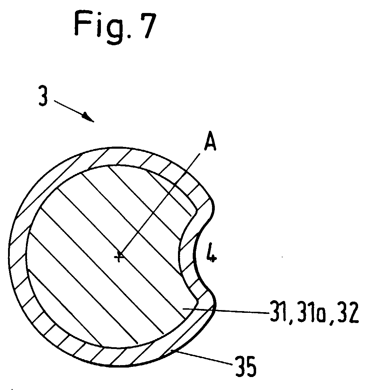

Bei der in Fig. 7 dargestellten Variante des Läufers 3 ist in der äusseren Hülse 35 des Läufers 3 eine axial in Richtung der Zylinderachse A verlaufende Rinne vorgesehen, die den Kanal 4 bildet, das heisst, die scheibenförmigen Elemente 31,32;31a weisen an ihrer Mantelfläche eine entsprechende Ausnehmung auf, in welche sich die Hülse 35 einschmiegt. Der Kanal 4 wird somit einerseits durch die Hülse 35 begrenzt, andererseits bildet die innere Wandung des hohlzylindrischen Stators 2 eine Begrenzungsfläche des Kanals 4. Natürlich kann auch diese Variante des Läufers mit mehreren Kanälen 4 ausgestaltet sein, in sinngemäss gleicher Weise wie in Fig. 6 dargestellt und in diesem Zusammenhang erläutert.

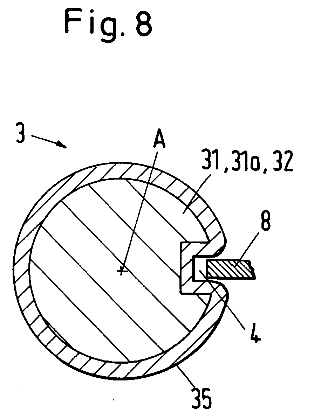

Wie bereits vorne erwähnt, kann der Kanal 4 ebenso gut mit zumindest teilweise eckigem Querschnitt ausgebildet sein. Eine solche Ausbildung ist besonders gut geeignet, um den Kanal 4 auch dazu zu nutzen, eine Rotation des Läufers 3 um die Zylinderachse A zu verhindern. Fig. 8 zeigt eine Variante für den Läufer 3, bei welcher der Kanal 4 an seiner in radialer Richtung gesehen inneren Seite eckig ausgestaltet ist. Ferner ist ein Sicherungsmittel 8 vorgesehen, welches bezüglich des Stators 2 drehfest angeordnet ist und welches in den Kanal 4 eingreift, um eine Rotation des Läufers 3 um die Zylinderachse A zu verhindern. Es versteht sich, dass das Sicherungsmittel 8 so ausgebildet ist bzw. so angeordnet ist, dass der Kanal 4 durchgängig bleibt. Beispielsweise kann das Sicherungsmittel 8, wie in Fig. 8 gezeigt, als ein Stift ausgestaltet sein, der in den Kanal 4 eingreift, aber nicht bis zu dessen radial gesehen innerem Ende reicht, sodass ein Teil des Querschnitts des Kanals durchgängig bleibt.

Um den Kanal 4 durchgängig zu halten, kann das Sicherungsmitttel 8 beispielsweise auch als Öse oder in Form einer zweizackigen Gabel ausgestaltet sein. Analog kann bei einer zentrischen Anordnung des Kanals 4 das Sicherungsmittel 8 hohl ausgebildet sein.

Durch das Sicherungsmittel 8 ist der Läufer 3 wirkungsvoll gegen Drehungen um die Zylinderachse A geschützt.

Bei Ausbildungen des Läufers 3, welche mehr als einen Kanal 4 aufweisen, sind die Kanäle 4 vorzugsweise bezüglich der Umfangsrichtung des Läufers 3 äquidistant angeordnet. Dadurch wird die Radialsymmetrie des magnetischen Induktionsfeldes im Innern des Stators 2 am wenigsten gestört, was sich positiv auf das Lauf- und Positionierverhalten des Linearantriebs auswirkt. So sind beispielsweise bei einer Ausbildung des Läufers 3 mit zwei Kanälen 4 (siehe Fig. 6) diese Kanäle 4 bevorzugt diametral gegenüberliegend an der Mantelfläche des Läufers 3 angeordnet.

## Patentansprüche

1. Elektromagnetischer Linearantrieb mit einem hohlzylindrischen Stator (2) und mit einem stabförmigen Läufer (3), der im Innern des Stators (2) angeordnet ist und in Richtung der Zylinderachse (A) des Stators relativ zu diesem bewegbar ist, dadurch gekennzeichnet, dass der Läufer (3) mindestens einen Kanal (4) aufweist, der sich in Richtung der Zylinderachse (A) erstreckt und eine durchgängige Verbindung zwischen der distalen Stirnfläche (36) des Läufers (3) und dem dieser Stirnfläche (36) abgewandten Endbereich (5) des Linearantriebs bildet.

2. Linearantrieb nach Anspruch 1, wobei der Kanal (4) zentrisch im Läufer (3) angeordnet ist.

3. Linearantrieb nach Anspruch 1, wobei der Kanal (4) an der Mantelfläche des Läufers (3) angeordnet ist.

4. Linearantrieb nach einem der vorangehenden Ansprüche, wobei eine innere Hülse (37) in dem Läufer 3 vorgesehen ist, die den Kanal (4) umgibt.

5. Linearantrieb nach Anspruch 1, bei welchem der Läufer (3) mindestens zwei Kanäle (4) aufweist, die sich jeweils in Richtung der Zylinderachse (A) des Stators (2) erstrecken und jeweils eine durchgängige Verbindung zwischen der distalen Stirnfläche (36) des Läufers (3) und dem dieser Stirnfläche (36) abgewandten Endbereich (5) des Linearantriebs bilden, wobei die Kanäle (4) jeweils an der Mantelfläche des Läufers (3) angeordnet sind.

6. Linearantrieb nach einem der Ansprüche 3 -5, wobei der Läufer (3) eine äussere, im wesentlichen hohlzylindrische Hülse (35) aufweist, die eine Begrenzungsfläche jedes Kanals (4) bildet.

7. Linearantrieb nach einem der Ansprüche 3-6, wobei die innere Wandung des hohlzylindrischen Stators (2) eine Begrenzungsfläche jedes Kanals (4) bildet.

8. Linearantrieb nach einem der Ansprüche 5-7, wobei die Kanäle (4) bezüglich der Umfangsrichtung des Läufers (3) äquidistant angeordnet sind.

9. Linearantrieb nach einem der vorangehenden Ansprüche, mit einem bezüglich des Stators (2) drehfest angeordneten Sicherungsmittel (8), welches in zumindest einen Kanal (4) eingreift, um eine Rotation des Läufers (3) um die Zylinderachse (A) zu verhindern.
